# EUROPEAN PATENT SPECIFICATION

(11) **EP 3 955 636 B1**
(45) Date of publication and mention of the grant of the patent: **22.10.2025**
(21) Application number: 20788041.0
(22) Date of filing: 09.04.2020
(51) Int. Cl.: H04W 36/36, H04W 74/0833, H04W 36/00, H04W 36/24, H04W 36/30

(54) **TERMINAL HANDOVER METHOD AND COMMUNICATION DEVICE**
ENDGERÄTEÜBERGABEVERFAHREN UND KOMMUNIKATIONSVORRICHTUNG
MÉTHODE DE TRANSFERT DE TERMINAL ET DISPOSITIF DE COMMUNICATION

(30) Priority: 09.04.2019 CN 201910281825
(43) Date of publication of application: 16.02.2022
(73) Proprietor: Vivo Mobile Communication Co., Ltd., Dongguan, Guangdong 523860 (CN)
(72) Inventor: CHEN, Li, Dongguan, Guangdong 523860 (CN)
(74) Representative: Winter, Brandl - Partnerschaft mbB
(86) International application number: PCT/CN2020/083966
(87) International publication number: WO 2020/207436

(56) References cited:
- EP-A1- 2 833 669
- WO-A1-2018/067063
- CN-A- 109 392 031
- VIVO: "Discussion on the RLF and HOF for CHO", vol. RAN WG2, no. Xi'an, China; 20190408 - 20190412, 29 March 2019 (2019-03-29), XP051692705, Retrieved from the Internet <URL:http://www.3gpp.org/ftp/tsg%5Fran/WG2%5FRL2/TSGR2%5F105bis/Docs/R2%2D1903437%2Ezip> [retrieved on 20190329]
- VIVO: "Signaling procedure for conditional handover", vol. RAN WG2, no. Xi'an, China; 20190408 - 20190412, 29 March 2019 (2019-03-29), XP051692702, Retrieved from the Internet <URL:http://www.3gpp.org/ftp/tsg%5Fran/WG2%5FRL2/TSGR2%5F105bis/Docs/R2%2D1903434%2Ezip> [retrieved on 20190329]
- NEC: "Conditional handover procedure in LTE", 15 February 2019 (2019-02-15), pages 1 - 4, XP051602369, Retrieved from the Internet <URL:http://www.3gpp.org/ftp/tsg%5Fran/WG2%5FRL2/TSGR2%5F105/Docs/R2%2D1901003%2Ezip>
- INTEL CORPORATION: "Single connected handover in NR", vol. RAN WG2, no. Reno, Nevada; 20161114 - 20161118, 5 November 2016 (2016-11-05), XP051193066, Retrieved from the Internet <URL:http://www.3gpp.org/ftp/tsg_ran/WG2_RL2/TSGR2_96/Docs/> [retrieved on 20161105]
- MEDIATEK INC: "Conditional Handover Procedures", 2 November 2018 (2018-11-02), pages 1 - 6, XP051480898, Retrieved from the Internet <URL:http://www.3gpp.org/ftp/tsg%5Fran/WG2%5FRL2/TSGR2%5F104/Docs/R2%2D1816959%2Ezip>
- VIVO: "Discussion on the RLF and HOF for CHO", 3GPP TSG-RAN WG2 MEETING #105BIS R2-1903437, 29 March 2019 (2019-03-29), XP051692705
- VIVO: "Discussion on the RLF and HOF for CHO", 3GPP TSG-RAN WG2 MEETING #105 R2-1900512, 1 March 2019 (2019-03-01), XP051601895

## Description

### CROSS-REFERENCE TO RELATED APPLICATIONS

This application claims priority to Chinese Patent Application No. 201910281825.8, filed in China on April 9, 2019.

### TECHNICAL FIELD

Embodiments of this disclosure relate to the field of wireless communications technologies, and in particular, to a terminal handover method and a communications device.

### BACKGROUND

In a terminal handover (Handover, HO) procedure, a source cell transmits a handover request to a potential target cell, and the potential target cell receiving the handover request reserves a random access channel (Random Access Channel, RACH) resource (referred to as a random access resource for short) for the terminal, and delivers a handover command to the terminal through the source cell. From delivering of the handover command until successful access to the target cell by the terminal to complete the handover procedure, random access resources need to be reserved by all potential target cells, leading to a problem of low utilization of random access resources.

Document R2-1903437 discloses discussion on the RLF and HOF for CHO. Proposal 5: A timer should be introduced to control the validity of reserved RACH resource for conditional handover.

Document EP 2833669 A1 discloses an improved handover procedure for a mobile terminal. Under control of the target base station, the mobile terminal performs a handoff to a target base station, and it is configured for communication with the target base station via a target radio cell comprising a downlink carrier and an uplink carrier.

### SUMMARY

The invention is set out in the appended set of claims.

### BRIEF DESCRIPTION OF DRAWINGS

Other advantages and benefits will become apparent to those of ordinary skill in the art by reading detailed description of the exemplary embodiments below. The accompanying drawings are merely intended to illustrate the purposes of the preferred implementations, and should not be construed as a limitation on this disclosure. Throughout the accompanying drawings, the same reference numerals represent the same components. In the accompanying drawings:
FIG. 1 is a schematic architectural diagram of a wireless communications system according to some embodiments of this disclosure;
FIG. 2 is a schematic flowchart of conditional handover according to some embodiments of this disclosure;
FIG. 3 is a schematic flowchart of a terminal handover;
FIG. 4 is a schematic flowchart of a further terminal handover method;
FIG. 5 is a schematic flowchart of a further terminal handover method;
FIG. 6 is a schematic flowchart of a further terminal handover method;
FIG. 7 is a schematic flowchart of a further terminal handover method;
FIG. 8 is a schematic flowchart of a further terminal handover method;
FIG. 9 is a schematic structural diagram of a communications device according to this disclosure;
FIG. 10 is a further schematic structural diagram of a communications device;
FIG. 11 is a further schematic structural diagram of a communications device;
FIG. 12 is a further schematic structural diagram of a communications device;
FIG. 13 is a further schematic structural diagram of a communications device;
FIG. 14 is a further schematic structural diagram of a communications device; and
FIG. 15 is a schematic structural diagram of a terminal according to this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some but not all of the embodiments of this disclosure. The protection scope of this disclosure is defined by the scope of the appended claims. The present invention is defined by the attached independent claims. Advantageous embodiments are described in the attached dependent claims. Embodiments and/or examples mentioned in the description that do not fall under the scope of the claims are useful for understanding the present invention.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In some embodiments of this disclosure, words such as "an example" or "for example" are used to represent an example, an instance, or an illustration. Any embodiment or design scheme described as "an example" or "for example" in some embodiments of this disclosure should not be construed as being more preferred or advantageous than other embodiments or design schemes. To be precise, the words such as "an example" or "for example" are intended to present a related concept in a specific manner.

The following describes the embodiments of this disclosure with reference to the accompanying drawings. A terminal handover method and a communications device provided in some embodiments of this disclosure may be applied to a wireless communications system. The wireless communications system may be a 5G system, an evolved long term evolution (Evolved Long Term Evolution, eLTE) system, or a subsequent evolved communications system.

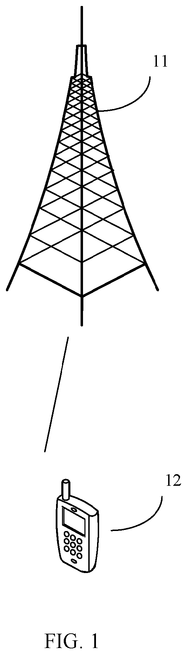

Referring to FIG. 1, FIG. 1 is a schematic architectural diagram of a wireless communications system according to some embodiments of this disclosure. As shown in FIG. 1, the wireless communications system may include a network-side device 11 and a terminal 12. The terminal 12 may be connected to the network-side device 11. In an actual application, connection between the foregoing devices may be wireless connection. To conveniently and intuitively represent a connection relationship between the devices, a solid line is used in FIG. 1.

It should be noted that the foregoing communications system may include a plurality of terminals 12, and the network-side device 11 may communicate with the plurality of terminals 12 (transmitting signaling or data).

The network-side device 11 provided in some embodiments of this disclosure may be a base station, and the base station may be a base station commonly used, or may be an evolved base station (evolved node base station, eNB), or may be a device in the 5G system, such as a network-side device (such as a next-generation base station (next generation node base station, gNB) or a transmission and reception point (transmission and reception point, TRP)) or a cell cell, or may be a network-side device in a subsequent evolved communications system. The terms do not constitute any limitation thereon.

The terminal 12 provided in some embodiments of this disclosure may be a mobile phone, a tablet computer, a notebook computer, an ultra-mobile personal computer (Ultra-Mobile Personal Computer, UMPC), a netbook, a personal digital assistant (Personal Digital Assistant, PDA), or the like. Persons skilled in the art can understand that the words do not constitute any limitation thereon.

The following first describes a handover procedure included in some embodiments of this disclosure.

In order to avoid a handover failure resulting from a failure of the terminal in receiving a handover command related message sent by the source base station due to a deteriorated channel condition of the source cell, a conditional handover (Conditional Handover) procedure is introduced.

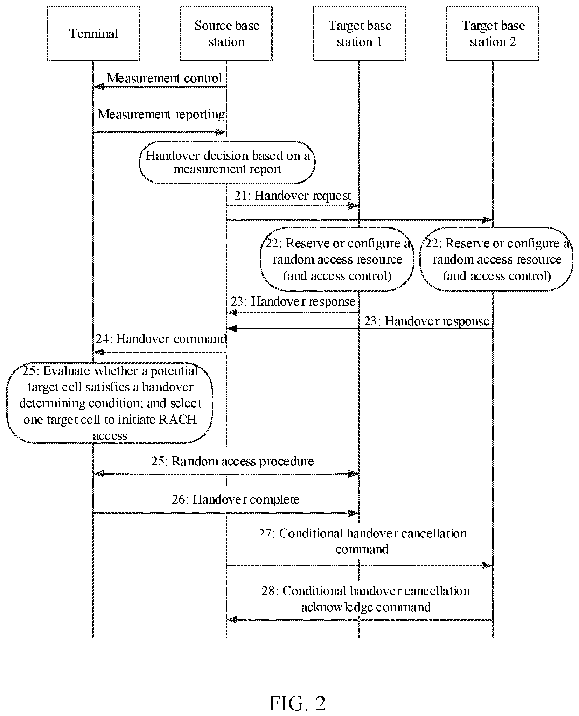

Referring to FIG. 2, the conditional handover procedure includes the following steps:
Step 21: A source base station performs handover decision based on a measurement report reported by a terminal, and if determining that a terminal handover is required, sends a handover request (handover request) to one or more target base stations.
Step 22: A target base station reserves or configures a random access resource for the terminal handover, so that the terminal performs random access to the target base station. Optionally, the target base station performs access control on the terminal.

Herein, reserving or configuring is a same action, and both indicates allocating a random access resource to the terminal.

Step 23: If the target base station allows access control, the target base station feeds back a handover response (handover response) to the source base station. Optionally, a handover command may be carried in the handover response. The handover command may include an identifier of the target base station or a handover determining condition, and the handover command is transparently transmitted to the terminal through the source base station.

Step 24: The source base station sends a message (such as an RRC reconfiguration message or a mobility control message Mobility Control) carrying the handover command; optionally, and the handover command includes a handover determining condition.

Step 25: The terminal evaluates whether a measurement result of a potential target cell satisfies a configured or preset handover determining condition; and if yes, selects one target cell to initiate RACH access.

The potential target cell is a cell corresponding to the target base station.

The configured handover determining condition is a handover determining condition configured by the target base station, where handover determining conditions configured by different target base stations may be different or the same; and the preset handover determining condition is a handover determining condition specified by the protocol. In this case, all target base stations correspond to the same handover determining condition.

Step 26: The terminal sends a handover completion to a target base station corresponding to the target cell.

Step 27: The source base station sends a conditional handover cancellation command to a target base station corresponding to other potential target cells than the target cell.

Step 28: Another target base station sends a conditional handover cancellation acknowledge command to the source base station.

In the foregoing conditional handover procedure, how to effectively improve utilization of random access resources is a technical problem to be resolved by some embodiments of this disclosure.

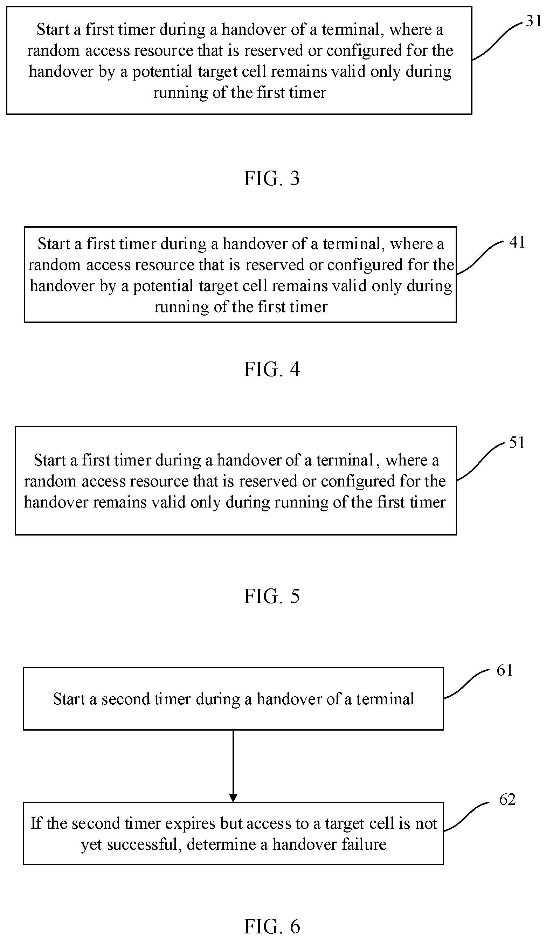

In order to resolve the foregoing problem, referring to FIG. 3, some embodiments of this disclosure provide a terminal handover method. The terminal handover method is applied to the terminal, and includes the following steps.

Step 31: Start a first timer during a handover of the terminal, where a random access resource that is reserved or configured for the handover by a potential target cell remains valid only during running of the first timer.

That the random access resource reserved or configured for the handover by the potential target cell remains valid only during running of the first timer means that: the random access resource reserved or configured for the handover by the potential target cell becomes invalid when the first timer stops or expires, so that the potential target cell can release the random access resource reserved or configured for the handover, thereby effectively improving utilization of random access resources.

A starting condition of the first timer includes one of the following:
reception of a handover command and/or handover condition;
detection that a measurement result satisfies a handover condition;
random access to a target cell being initiated, where the target cell is selected by the terminal from the potential target cell; and
a handover indication being sent, where the handover indication is used for notifying the source base station of the handover of the terminal or notifying the source base station of the target cell to which the terminal is handed over.

The handover command and/or handover condition may be sent by the source base station, or may be transmitted transparently to the terminal by the target base station through the source base station.

The handover condition may be carried in the handover command, or may be carried in other messages. That is, when the handover condition is carried in the handover command, the starting condition of the first timer may include reception of the handover command. When the handover condition is not carried in the handover command, the starting condition of the first timer may include reception of the handover condition, or reception of the handover command and handover condition, or reception of the handover command.

In some embodiments of this disclosure, optionally, a stopping condition or suspending condition of the first timer includes one of the following:
detection that a measurement result satisfies a handover condition;
random access to a target cell being initiated;
successful access to the target cell;
random access being successful;
determining of a handover failure;
expiration of a second timer; and
starting of the second timer; where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

If the suspending condition of the first timer includes that random access to the target cell has been initiated, a resuming condition of the first timer may be successful random access..

The measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

The following briefly describes the second timer.

In some embodiments of this disclosure, the second timer may also be referred to as T304, and during the handover of the terminal, determining a failure in the handover process may be controlled by using T304. The starting condition of T304 is that the handover command has been received. If the handover is successful (that is, the target cell is successfully accessed) during running of T304, T304 is stopped; if T304 expires but the target cell has not been successfully accessed, a handover failure is determined.

In some embodiments of this disclosure, after the first timer is started, the following is further included:
if a second timer is started during running of the first timer, using a timeout time point of the second timer as a timeout time point of the first timer, where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, a timeout time point of the second timer is later than a timeout time point of the first timer.

It is assumed that the timeout time point of the first timer is T1, the second timer is started during running of the first timer, the timeout time point of the second timer is T2, and T2 is later than T1, then the timeout time point of the first timer may be modified to T2.

In some embodiments of this disclosure, optionally, the terminal handover method further includes:
if the first timer expires or the first timer stops, performing one of the following operations:
prohibiting initiating random access to the potential target cell corresponding to the first timer;
prohibiting initiating random access to all the potential target cells;
allowing a random access procedure in progress to continue;
allowing a random access procedure in progress to continue until a second timer expires;
stopping a random access procedure in progress;
determining a handover failure;
sending an indication for indicating that the potential target cell releases the random access resource that is reserved or configured for the handover; and
sending an indication for indicating that the first timer has expired or stopped; where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

In some embodiments of this disclosure, optionally, the stopping a random access procedure in progress includes at least one of the following:
determining that the random access procedure has failed; and
indicating to an upper layer that the random access procedure has failed.

In some embodiments of this disclosure, optionally, the terminal handover method further includes:
performing one of the following operations within a preset period of time before timeout of the first timer:
prohibiting initiating random access to the potential target cell corresponding to the first timer; and
prohibiting initiating random access to all the potential target cells.

In some embodiments of this disclosure, optionally, the preset period of time is determined in one of the following manners:
being configured by the source cell;
being configured by the target cell; and
being specified by a protocol.

In some embodiments of this disclosure, optionally, there are a plurality of first timers, and each potential target cell corresponds to one first timer; or
all potential target cells correspond to one of the first timers.

Referring to FIG. 4, some embodiments of this disclosure further provide a terminal handover method applied to a source base station, where the method includes the following steps.

Step 41: Start a first timer during a handover of the terminal, where a random access resource that is reserved or configured for the handover by a potential target cell remains valid only during running of the first timer.

In some embodiments of this disclosure, the source base station is a base station corresponding to the source cell.

In some embodiments of this disclosure, during the handover of the terminal, the first timer is started, so that the potential target cell can release in a timely manner the random access resource reserved or configured for the terminal, thereby effectively improving utilization of random access resources.

In some embodiments of this disclosure, optionally, a starting condition of the first timer includes one of the following:
a handover request being sent to a target cell;
reception of a handover request response sent by a target cell;
a handover command and/or handover condition being sent to the terminal;
detection, by the terminal, that a measurement result satisfies a handover condition;
random access to a target cell being initiated by the terminal, where the target cell is selected by the terminal from the potential target cell; and
reception of a handover indication sent by the terminal, where the handover indication is used for notifying the source base station of the handover of the terminal or notifying the source base station of the target cell to which the terminal is handed over.

In some embodiments of this disclosure, optionally, a stopping condition or suspending condition of the first timer includes one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; where
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

In some embodiments of this disclosure, optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

In some embodiments of this disclosure, after the first timer is started, the following is further included:
if a second timer is started during running of the first timer, using a timeout time point of the second timer as a timeout time point of the first timer, where
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

In some embodiments of this disclosure, optionally, the terminal handover method further includes:
if the first timer expires or the first timer stops, performing one of the following operations:
sending an indication to the potential target cell, where the indication is used for indicating that the potential target cell releases the random access resource reserved or configured for the handover;
sending an indication to the potential target cell, where the indication is used for indicating that the potential target cell sets the random access resource reserved or configured for the handover to be invalid;
sending an indication to the terminal, where the indication is used for indicating that the random access resource reserved or configured for the handover is invalid;
sending an indication to the terminal, where the indication is used for indicating that the first timer has expired or stopped;
sending an indication to the terminal, where the indication is used for indicating that the terminal is not allowed to initiate random access to the potential target cell corresponding to the first timer;
sending an indication to the terminal, where the indication is used for indicating that the terminal is not allowed to initiate random access to all the potential target cells; and
determining a handover failure.

Referring to FIG. 5, some embodiments of this disclosure further provide a terminal handover method applied to a target base station, where the method includes the following steps.

Step 51: Start a first timer during a handover of a terminal, where a random access resource that is reserved or configured for the handover by a potential target cell remains valid only during running of the first timer.

In some embodiments of this disclosure, the target base station is a base station corresponding to the potential target cell.

In some embodiments of this disclosure, in the process that the terminal is handed over from the source cell to the target cell, the first timer is started, so that the potential target cell can release in a timely manner the random access resource reserved or configured for the terminal, thereby effectively improving utilization of random access resources.

Optionally, a starting condition of the first timer includes one of the following:
reception of a handover request sent by a source cell;
a random access resource being reserved or configured for the handover;
a handover request response being sent to the source cell;
a handover command and/or handover condition being sent;
detection, by the terminal, that a measurement result satisfies a handover condition;
random access to a target cell being initiated by the terminal, where the target cell is selected by the terminal from the potential target cell; and
reception of a handover indication sent by the terminal.

Optionally, a stopping condition or suspending condition of the first timer includes one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; where
a starting condition of the second timer is a handover command being sent to the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

After the first timer is started, the following is further included:
if a second timer is started during running of the first timer, using a timeout time point of the second timer as a timeout time point of the first timer, where
a starting condition of the second timer is a handover command being sent, a stopping condition of the second timer is successful access to the target cell by the terminal, and if the second timer expires but access to the target cell is not yet successful, a handover failure is determined; and
the target cell is selected by the terminal from the potential target cell.

Optionally, the terminal handover method further includes:
if the first timer expires, performing one of the following operations:
releasing the random access resource reserved or configured for the handover;
setting the random access resource reserved or configured for the handover to be invalid; and
determining a handover failure.

Referring to FIG. 6, some embodiments of this disclosure further provide a terminal handover method applied to a terminal, where the method includes the following steps.

Step 61: Start a second timer during a handover of the terminal.

Step 62: If the second timer expires but access to a target cell is not yet successful, determine a handover failure, where the target cell is selected by the terminal from potential target cells.

In some embodiments of this disclosure, the second timer is started to control determining of a handover failure during the terminal handover. In a case of a handover failure, the potential target cell may be notified in a timely manner to release the random access resource reserved or allocated for the handover, thereby improving utilization of random access resources.

A starting condition of the second timer includes one of the following:
reception of a handover command and/or handover condition;
detection that a measurement result satisfies a handover condition;
random access to a target cell being initiated; and
a handover indication being sent.

In some embodiments of this disclosure, optionally, a stopping condition or suspending condition of the second timer includes one of the following:
detection that a measurement result satisfies a handover condition;
random access to the target cell being initiated;
successful access to the target cell; and
successful random access.

In some embodiments of this disclosure, optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

In some embodiments of this disclosure, optionally, the terminal handover method further includes:
if the second timer expires or the second timer stops, performing one of the following operations:
prohibiting initiating random access to the potential target cell corresponding to the second timer;
prohibiting initiating random access to all the potential target cells;
allowing a random access procedure in progress to continue;
stopping a random access procedure in progress;
sending an indication for indicating that the potential target cell releases the random access resource that is reserved or configured for the handover; and
sending an indication for indicating that the second timer has expired or stopped.

In some embodiments of this disclosure, optionally, the stopping a random access procedure in progress includes at least one of the following:
determining that the random access procedure has failed; and
indicating to an upper layer that the random access procedure has failed.

In some embodiments of this disclosure, optionally, the terminal handover method further includes:
performing one of the following operations within a preset period of time before timeout of the second timer:
prohibiting initiating random access to the potential target cell corresponding to the second timer; and
prohibiting initiating random access to all the potential target cells.

In some embodiments of this disclosure, optionally, the preset period of time is determined in one of the following manners:
being configured by the source cell;
being configured by the target cell; and
being specified by a protocol.

In some embodiments of this disclosure, optionally,
there are a plurality of second timers, and each potential target cell corresponds to one second timer; or
all potential target cells correspond to one of the second timers.

In some embodiments of this disclosure, same as T304 described above, the second timer is also used to control determining of a handover failure. However, the starting condition, stopping condition, suspending condition, and/or an operation performed during timeout of T304 are different, that is, T304 is optimized, thereby improving utilization of random access resources.

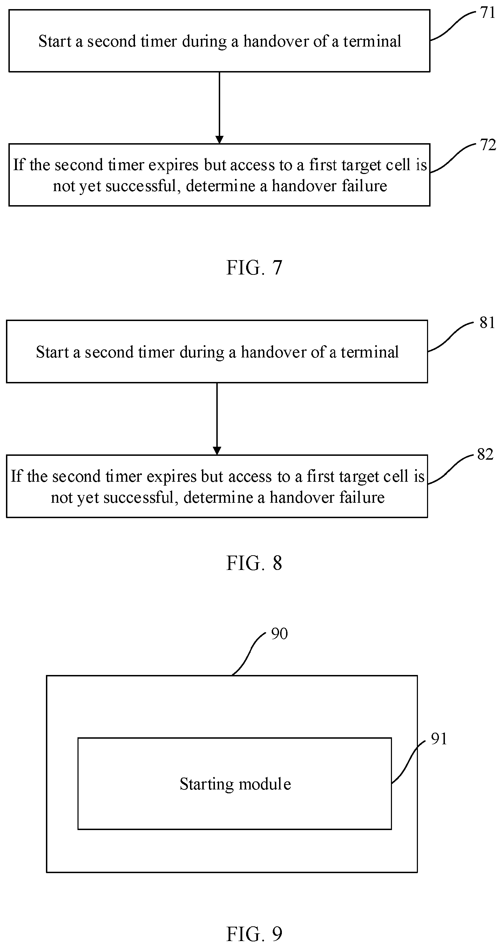

Referring to FIG. 7, some embodiments of this disclosure further provide a terminal handover method applied to a source base station, where the method includes the following steps.

Step 71: Start a second timer during a handover of a terminal.

Step 72: If the second timer expires but access to a target cell is not yet successful, determine a handover failure, where the target cell is selected by the terminal from potential target cells.

In some embodiments of this disclosure, optionally, a starting condition of the second timer includes one of the following:
a handover request being sent to a target cell;
reception of a handover request response sent by a target cell;
a handover command and/or handover condition being sent to the terminal;
detection, by the terminal, that a measurement result satisfies a handover condition;
random access to the target cell being initiated by the terminal; and
reception of a handover indication sent by the terminal.

In some embodiments of this disclosure, optionally, a stopping condition or suspending condition of the second timer includes one of the following:
detection, by the terminal, that a measurement result satisfies a handover condition;
random access to the target cell being initiated by the terminal;
successful access to the target cell being performed by the terminal; and
successful random access being performed by the terminal.

In some embodiments of this disclosure, optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

In some embodiments of this disclosure, optionally, the terminal handover method further includes:
if the second timer expires or the second timer stops, performing one of the following operations:
sending an indication to the potential target cell, where the indication is used for indicating that the potential target cell releases the random access resource reserved or configured for the handover;
sending an indication to the potential target cell, where the indication is used for indicating that the potential target cell sets the random access resource reserved or configured for the handover to be invalid;
sending an indication to the terminal, where the indication is used for indicating that the random access resource reserved or configured for the handover is invalid;
sending an indication to the terminal, where the indication is used for indicating that the second timer has expired or stopped;
sending an indication to the terminal, where the indication is used for indicating that the terminal is not allowed to initiate random access to the potential target cell corresponding to the second timer; and
sending an indication to the terminal, where the indication is used for indicating that the terminal is not allowed to initiate random access to all the potential target cells.

In some embodiments of this disclosure, same as T304 described above, the second timer is also used to control determining of a handover failure. However, the starting condition, stopping condition, suspending condition, and/or an operation performed during timeout of T304 are different, that is, T304 is optimized, thereby improving utilization of random access resources.

Referring to FIG. 8, some embodiments of this disclosure further provide a terminal handover method applied to a target base station, where the method includes the following steps.

Step 81: Start a second timer during a handover of a terminal.

Step 82: If the second timer expires but access to a target cell is not yet successful, determine a handover failure, where the target cell is selected by the terminal from potential target cells.

In some embodiments of this disclosure, optionally, a starting condition of the second timer includes one of the following:
reception of a handover request sent by a source cell;
a random access resource being reserved or configured for the handover;
a handover request response being sent to the source cell;
a handover command and/or handover condition being sent;
detection, by the terminal, that a measurement result satisfies a handover condition;
random access to the target cell being initiated by the terminal; and
reception of a handover indication sent by the terminal.

In some embodiments of this disclosure, optionally, a stopping condition or suspending condition of the second timer includes one of the following:
detection, by the terminal, that a measurement result satisfies a handover condition;
random access to the target cell being initiated by the terminal;
successful access to the target cell being performed by the terminal; and
successful random access being performed by the terminal.

In some embodiments of this disclosure, optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

In some embodiments of this disclosure, optionally, the terminal handover method further includes:
if the second timer expires, performing one of the following operations:
releasing the random access resource reserved or configured for the handover; and
setting the random access resource reserved or configured for the handover to be invalid.

In some embodiments of this disclosure, same as T304 described above, the second timer is also used to control determining of a handover failure. However, the starting condition, stopping condition, suspending condition, and/or an operation performed during timeout of T304 are different, that is, T304 is optimized, thereby improving utilization of random access resources.

Referring to FIG. 9, some embodiments of this disclosure further provide a communications device 90. The communications device 90 is a terminal, including:
a starting module 91, configured to start a first timer during a handover of a terminal, where a random access resource that is reserved or configured for the handover by a potential target cell remains valid only during running of the first timer.

A starting condition of the first timer includes one of the following:
reception of a handover command and/or handover condition;
detection that a measurement result satisfies a handover condition;
random access to a target cell being initiated, where the target cell is selected by the terminal from the potential target cell; and
a handover indication being sent.

Optionally, a stopping condition or suspending condition of the first timer includes one of the following:
detection that a measurement result satisfies a handover condition;
random access to a target cell being initiated;
successful access to the target cell;
random access being successful;
determining of a handover failure;
expiration of a second timer; and
starting of the second timer; where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, the terminal further includes:
a modification module, configured to: if a second timer is started during running of the first timer, use a timeout time point of the second timer as a timeout time point of the first timer, where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, the terminal further includes:
a first execution module, configured to: if the first timer expires or the first timer stops, perform one of the following operations:
prohibiting initiating random access to the potential target cell corresponding to the first timer;
prohibiting initiating random access to all the potential target cells;
allowing a random access procedure in progress to continue;
allowing a random access procedure in progress to continue until a second timer expires;
stopping a random access procedure in progress;
determining a handover failure;
sending an indication for indicating that the potential target cell releases the random access resource that is reserved or configured for the handover; and
sending an indication for indicating that the first timer has expired or stopped; where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, the stopping a random access procedure in progress includes at least one of the following:
determining that the random access procedure has failed; and
indicating to an upper layer that the random access procedure has failed.

Optionally, the terminal further includes:
a second execution module, configured to: perform one of the following operations within a preset period of time before timeout of the first timer:
prohibiting initiating random access to the potential target cell corresponding to the first timer; and
prohibiting initiating random access to all the potential target cells.

Optionally, the preset period of time is determined in one of the following manners:
being configured by the source cell;
being configured by the target cell; and
being specified by a protocol.

Optionally, there are a plurality of first timers, and each potential target cell corresponds to one first timer; or
all potential target cells correspond to one of the first timers.

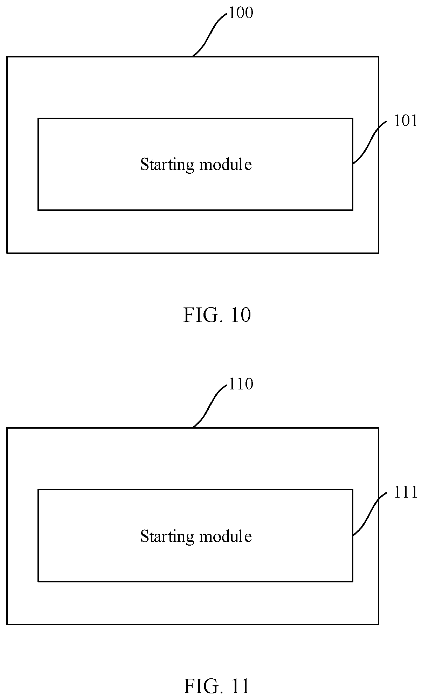

Referring to FIG. 10, some embodiments of this disclosure further provide a communications device 100. The communications device 100 is a base station, including:
a starting module 101, configured to start a first timer during a handover of a terminal, where a random access resource that is reserved or configured for the handover by a potential target cell remains valid only during running of the first timer.

Optionally, a starting condition of the first timer includes one of the following:
a handover request being sent to a target cell;
reception of a handover request response sent by a target cell;
a handover command and/or handover condition being sent to the terminal;
detection, by the terminal, that a measurement result satisfies a handover condition;
random access to a target cell being initiated by the terminal, where the target cell is selected by the terminal from the potential target cell; and
reception of a handover indication sent by the terminal.

Optionally, a stopping condition or suspending condition of the first timer includes one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; where
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, the base station further includes:
a modification module, configured to: if a second timer is started during running of the first timer, use a timeout time point of the second timer as a timeout time point of the first timer, where
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, the base station further includes:
an execution module, configured to: if the first timer expires or the first timer stops, perform one of the following operations:
sending an indication to the potential target cell, where the indication is used for indicating that the potential target cell releases the random access resource reserved or configured for the handover;
sending an indication to the potential target cell, where the indication is used for indicating that the potential target cell sets the random access resource reserved or configured for the handover to be invalid;
sending an indication to the terminal, where the indication is used for indicating that the random access resource reserved or configured for the handover is invalid;
sending an indication to the terminal, where the indication is used for indicating that the first timer has expired or stopped;
sending an indication to the terminal, where the indication is used for indicating that the terminal is not allowed to initiate random access to the potential target cell corresponding to the first timer;
sending an indication to the terminal, where the indication is used for indicating that the terminal is not allowed to initiate random access to all the potential target cells; and
determining a handover failure.

Referring to FIG. 11, some embodiments of this disclosure further provide a communications device 110. The communications device 110 is a base station, including:
a starting module 111, configured to start a first timer during a handover of a terminal, where a random access resource that is reserved or configured for the handover by a potential target cell remains valid only during running of the first timer.

Optionally, a starting condition of the first timer includes one of the following:
reception of a handover request sent by a source cell;
a random access resource being reserved or configured for the handover;
a handover request response being sent to the source cell;
a handover command and/or handover condition being sent;
detection, by the terminal, that a measurement result satisfies a handover condition;
random access to a target cell being initiated by the terminal, where the target cell is selected by the terminal from the potential target cell; and
reception of a handover indication sent by the terminal.

Optionally, a stopping condition or suspending condition of the first timer includes one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; where
a starting condition of the second timer is a handover command being sent to the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, the base station further includes:
a first execution module, configured to: if a second timer is started during running of the first timer, use a timeout time point of the second timer as a timeout time point of the first timer, where
a starting condition of the second timer is a handover command being sent, a stopping condition of the second timer is successful access to the target cell by the terminal, and if the second timer expires but access to the target cell is not yet successful, a handover failure is determined; and
the target cell is selected by the terminal from the potential target cell.

Optionally, the base station further includes:
a second execution module, configured to: if the first timer expires, perform one of the following operations:
releasing the random access resource reserved or configured for the handover;
setting the random access resource reserved or configured for the handover to be invalid; and
determining a handover failure.

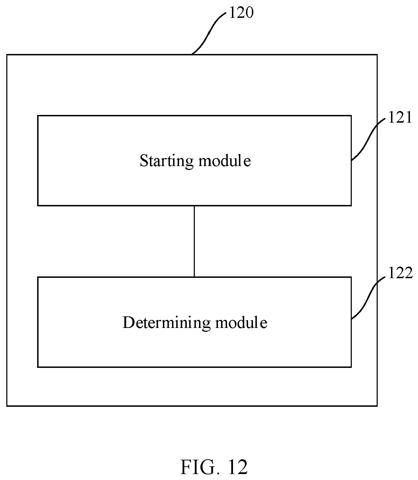

Referring to FIG. 12, some embodiments of this disclosure further provide a communications device 120. The communications device 120 is a terminal, including:
a starting module 121, configured to start a second timer during a handover of the terminal; and
a determining module 122, configured to: if the second timer expires but access to a target cell is not yet successful, determine a handover failure, where the target cell is selected by the terminal from potential target cells.

A starting condition of the second timer includes one of the following:
reception of a handover command and/or handover condition;
detection that a measurement result satisfies a handover condition;
random access to the target cell being initiated; and
a handover indication being sent.

Optionally, a stopping condition or suspending condition of the second timer includes one of the following:
detection that a measurement result satisfies a handover condition;
random access to the target cell being initiated;
successful access to the target cell; and
successful random access.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, the terminal further includes:
a first execution module, configured to: if the second timer expires or the second timer stops, perform one of the following operations:
prohibiting initiating random access to the potential target cell corresponding to the second timer;
prohibiting initiating random access to all the potential target cells;
allowing a random access procedure in progress to continue;
stopping a random access procedure in progress;
sending an indication for indicating that the potential target cell releases the random access resource that is reserved or configured for the handover; and
sending an indication for indicating that the second timer has expired or stopped.

Optionally, the stopping a random access procedure in progress includes at least one of the following:
determining that the random access procedure has failed; and
indicating to an upper layer that the random access procedure has failed.

Optionally, the terminal further includes:
a second execution module, configured to: perform one of the following operations within a preset period of time before timeout of the second timer:
prohibiting initiating random access to the potential target cell corresponding to the second timer; and
prohibiting initiating random access to all the potential target cells.

Optionally, the preset period of time is determined in one of the following manners:
being configured by the source cell;
being configured by the target cell; and
being specified by a protocol.

Optionally, there are a plurality of second timers, and each potential target cell corresponds to one second timer; or
all potential target cells correspond to one of the second timers.

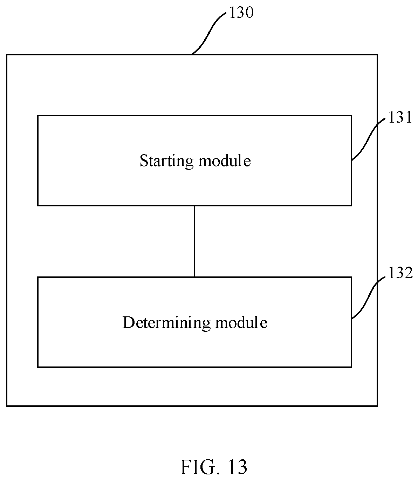

Referring to FIG. 13, some embodiments of this disclosure further provide a communications device 130. The communications device 130 is a base station, including:
a starting module 131, configured to start a second timer during a handover of a terminal; and
a determining module 132, configured to: if the second timer expires but access to a target cell is not yet successful, determine a handover failure, where the target cell is selected by the terminal from potential target cells.

Optionally, a starting condition of the second timer includes one of the following:
a handover request being sent to a target cell;
reception of a handover request response sent by a target cell;
a handover command and/or handover condition being sent to the terminal;
detection, by the terminal, that a measurement result satisfies a handover condition;
random access to the target cell being initiated by the terminal; and
reception of a handover indication sent by the terminal.

Optionally, a stopping condition or suspending condition of the second timer includes one of the following:
detection, by the terminal, that a measurement result satisfies a handover condition;
random access to the target cell being initiated by the terminal;
successful access to the target cell being performed by the terminal; and
successful random access being performed by the terminal.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, the base station further includes:
an execution module, configured to: if the second timer expires or the second timer stops, perform one of the following operations:
sending an indication to the potential target cell, where the indication is used for indicating that the potential target cell releases the random access resource reserved or configured for the handover;
sending an indication to the potential target cell, where the indication is used for indicating that the potential target cell sets the random access resource reserved or configured for the handover to be invalid;
sending an indication to the terminal, where the indication is used for indicating that the random access resource reserved or configured for the handover is invalid;
sending an indication to the terminal, where the indication is used for indicating that the second timer has expired or stopped;
sending an indication to the terminal, where the indication is used for indicating that the terminal is not allowed to initiate random access to the potential target cell corresponding to the second timer; and
sending an indication to the terminal, where the indication is used for indicating that the terminal is not allowed to initiate random access to all the potential target cells.

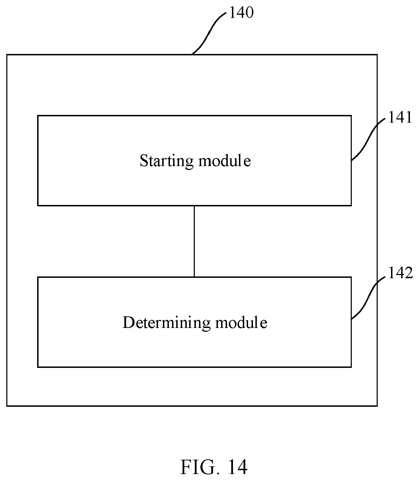

Referring to FIG. 14, some embodiments of this disclosure further provide a communications device 140. The communications device 140 is a base station, including:
a starting module 141, configured to start a second timer during a handover of a terminal; and
a determining module 142, configured to: if the second timer expires but access to a target cell is not yet successful, determine a handover failure, where the target cell is selected by the terminal from potential target cells.

Optionally, a starting condition of the second timer includes one of the following:
reception of a handover request sent by a source cell;
a random access resource being reserved or configured for the handover;
a handover request response being sent to the source cell;
a handover command and/or handover condition being sent;
detection, by the terminal, that a measurement result satisfies a handover condition;
random access to the target cell being initiated by the terminal; and
reception of a handover indication sent by the terminal.

Optionally, a stopping condition or suspending condition of the second timer includes one of the following:
detection, by the terminal, that a measurement result satisfies a handover condition;
random access to the target cell being initiated by the terminal;
successful access to the target cell being performed by the terminal; and
successful random access being performed by the terminal.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, the base station further includes:
an execution module, configured to: if the second timer expires, perform one of the following operations:
releasing the random access resource reserved or configured for the handover; and
setting the random access resource reserved or configured for the handover to be invalid.

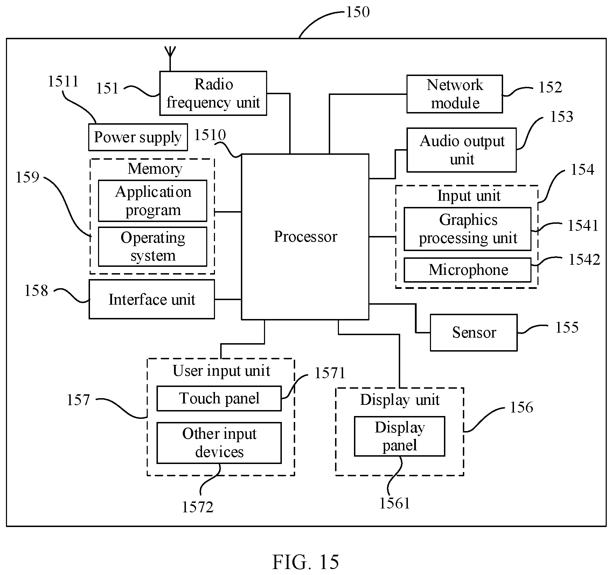

Referring to FIG. 15, FIG. 15 is a schematic structural diagram of a terminal according to another embodiment of this disclosure. The terminal 150 includes but is not limited to components such as a radio frequency unit 151, a network module 152, an audio output unit 153, an input unit 154, a sensor 155, a display unit 156, a user input unit 157, an interface unit 158, a memory 159, a processor 1510, and a power supply 1511. A person skilled in the art may understand that the structure of the terminal shown in FIG. 15 does not constitute any limitation on the terminal. The terminal may include more or fewer components than those shown in the figure, or a combination of some components, or the components disposed differently. In this embodiment of this disclosure, the terminal includes but is not limited to a mobile phone, a tablet computer, a laptop computer, a personal digital assistant, an in-vehicle terminal, a wearable device, a pedometer, and the like.

The processor 1510 is configured to start a first timer during a handover of a terminal, where a random access resource that is reserved or configured for the handover by a potential target cell remains valid only during running of the first timer.

For specific description of the first timer, refer to description in the embodiment corresponding to FIG. 3. Details are not described herein again.

Alternatively,
the processor 1510 is configured to: start a second timer during a handover of a terminal; and if the second timer expires but access to a target cell is not yet successful, determining a handover failure, where the target cell is selected by the terminal from potential target cells.

For specific description of the second timer, refer to description in the embodiment corresponding to FIG. 6. Details are not described herein again.

It should be understood that in some embodiments of the present disclosure, the radio frequency unit 151 may be configured to: receive and send signals in an information receiving/sending process or a call process; and specifically, after receiving downlink data from a base station, send the downlink data to the processor 1510 for processing, and in addition, send uplink data to the base station. Generally, the radio frequency unit 151 includes but is not limited to an antenna, at least one amplifier, a transceiver, a coupler, a low noise amplifier, a duplexer, and the like. In addition, the radio frequency unit 151 may also communicate with a network and other devices via a wireless communications system.

The terminal provides a user with wireless broadband internet access through the network module 152, for example, helping the user to transmit and receive e-mails, browse web pages, and access streaming media.

The audio output unit 153 may convert audio data received by the radio frequency unit 151 or the network module 152 or stored in the memory 159 into an audio signal and output the audio signal as a sound. Furthermore, the audio output unit 153 may also provide audio output (for example, a call signal received sound or a message received sound) related to a specific function performed by the terminal 150. The audio output unit 153 includes a speaker, a buzzer, a receiver, and the like.

The input unit 154 is configured to receive an audio or video signal. The input unit 154 may include a graphics processing unit (Graphics Processing Unit, GPU) 1541 and a microphone 1542. The graphics processing unit 1541 processes image data of a still picture or video obtained by an image capture apparatus (such as a camera) in a video capture mode or an image capture mode. A processed image frame may be displayed on the display unit 156. The image frame processed by the graphics processing unit 1541 may be stored in the memory 159 (or another storage medium) or be transmitted by the radio frequency unit 151 or the network module 152. The microphone 1542 is capable of receiving sounds and processing such sounds into audio data. The processed audio data may be converted in a telephone call mode into a format that can be transmitted by the radio frequency unit 151 to a mobile communications base station, for outputting.

The terminal 150 may further include at least one sensor 155, for example, an optical sensor, a motion sensor, and another sensor. Specifically, the optical sensor may include an ambient light sensor and a proximity sensor. The ambient light sensor may adjust luminance of the display panel 1561 based on brightness of ambient light, and the proximity sensor may turn off the display panel 1561 and/or backlight when the terminal 150 moves close to an ear. As a type of motion sensor, an accelerometer sensor can detect magnitudes of accelerations in all directions (usually three axes), can detect a magnitude and a direction of gravity when the mobile phone is in a static state, and can be applied to posture recognition (such as screen switching between portrait and landscape, related games, and magnetometer posture calibration) of the terminal, functions related to vibration recognition (such as pedometer and tapping), and the like. The sensor 155 may also include a fingerprint sensor, a pressure sensor, an iris sensor, a molecular sensor, a gyroscope, a barometer, a hygrometer, a thermometer, an infrared sensor, and the like. Details are not described herein.

The display unit 156 is configured to display information input by the user or information provided to the user. The display unit 156 may include a display panel 1561, and the display panel 1561 may be configured in a form of a liquid crystal display (Liquid Crystal Display, LCD), an organic light-emitting diode (Organic Light-Emitting Diode, OLED), or the like.

The user input unit 157 may be configured to receive input digit or character information and generate key signal input related to user setting and function control of the mobile terminal. Specifically, the user input unit 157 may include a touch panel 1571 and other input devices 1572. The touch panel 1571 is also referred to as a touchscreen and can collect a touch operation (such as an operation performed by the user on the touch panel 1571 or near the touch panel 1571 with a finger or by using any proper object or accessory such as a stylus) of the user on or near the touch panel 1571. The touch panel 1571 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and transmits the touchpoint coordinates to the processor 1510, and can receive a command transmitted by the processor 1510 and execute the command. In addition, the touch panel 1571 may be implemented in a plurality of forms, for example, as a resistive, capacitive, infrared, or surface acoustic wave touch panel. In addition to the touch panel 1571, the user input unit 157 may further include other input devices 1572. Specifically, the other input devices 1572 may include but are not limited to a physical keyboard, a function key (such as a volume control key or an on/off key), a trackball, a mouse, and a joystick. Details are not described herein.

Further, the touch panel 1571 may cover the display panel 1561. When detecting a touch operation on or near the touch panel 1571, the touch panel 1571 transmits the touch operation to the processor 1510 to determine a type of a touch event. Then, the processor 1510 provides a corresponding visual output on the display panel 1561 based on the type of the touch event. Although in FIG. 15, the touch panel 1571 and the display panel 1561 act as two independent parts to implement input and output functions of the terminal, in some embodiments, the touch panel 1571 and the display panel 1561 may be integrated to implement the input and output functions of the terminal. This is not specifically limited herein.

The interface unit 158 is an interface between an external apparatus and the terminal 150. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 158 may be configured to: receive input (for example, data information and power) from the external apparatus, and transmit the received input to one or more elements in the terminal 150, or may be configured to transmit data between the terminal 150 and the external apparatus.

The memory 159 may be configured to store software programs and various data. The memory 159 may primarily include a program storage area and a data storage area. The program storage area may store an operating system, an application (such as an audio play function and an image play function) required by at least one function, and the like. The data storage area may store data (such as audio data and a phone book) created based on use of the mobile phone. In addition, the memory 159 may include a high-speed random access memory, and may further include a non-volatile memory such as at least one disk storage device, a flash memory device, or another volatile solid-state storage device.

The processor 1510 is a control center of the terminal, and is connected to all components of the terminal by using various interfaces and lines. By running or executing a software program and/or module that is stored in the memory 159 and calling data stored in the memory 159, the processor 1510 executes various functions of the terminal and processes data, so as to perform overall monitoring on the terminal. The processor 1510 may include one or more processing units. Optionally, an application processor and a modem processor may be integrated in the processor 1510. The application processor primarily processes an operating system, user interfaces, application programs, and the like. The modem processor primarily processes radio communication. It can be understood that the modem processor may alternatively be not integrated in the processor 1510.

The terminal 150 may further include the power supply 1511 (for example, a battery) supplying power to all components. Optionally, the power supply 1511 may be logically connected to the processor 1510 through a power management system. In this way, functions such as charge management, discharge management, and power consumption management are implemented by using the power management system.

In addition, the terminal 150 includes some functional modules that are not shown. Details are not described herein.

Some embodiments of this disclosure further provide a communications device, and the communications device is a terminal, including a processor and a memory. In some embodiments of this disclosure, the terminal further includes a program stored in the memory and capable of running on the processor. When the program is executed by the processor, the following steps are implemented:
starting a first timer during a handover of the terminal, where a random access resource that is reserved or configured for the handover by a potential target cell remains valid only during running of the first timer.

A starting condition of the first timer includes one of the following:
reception of a handover command and/or handover condition;
detection that a measurement result satisfies a handover condition;
random access to a target cell being initiated, where the target cell is selected by the terminal from the potential target cell; and
a handover indication being sent.

Optionally, a stopping condition or suspending condition of the first timer includes one of the following:
detection that a measurement result satisfies a handover condition;
random access to a target cell being initiated;
successful access to the target cell;
random access being successful;
determining of a handover failure;
expiration of a second timer; and
starting of the second timer; where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

When the program is executed by the processor, the following steps are further implemented:
after the first timer is started, the following is further included:
if a second timer is started during running of the first timer, using a timeout time point of the second timer as a timeout time point of the first timer, where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, when the program is executed by the processor, the following steps may be further implemented:
if the first timer expires or the first timer stops, performing one of the following operations:
prohibiting initiating random access to the potential target cell corresponding to the first timer;
prohibiting initiating random access to all the potential target cells;
allowing a random access procedure in progress to continue;
allowing a random access procedure in progress to continue until a second timer expires;
stopping a random access procedure in progress;
determining a handover failure;
sending an indication for indicating that the potential target cell releases the random access resource that is reserved or configured for the handover; and
sending an indication for indicating that the first timer has expired or stopped; where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

Optionally, the stopping a random access procedure in progress includes at least one of the following:
determining that the random access procedure has failed; and
indicating to an upper layer that the random access procedure has failed.

Optionally, when the program is executed by the processor, the following steps may be further implemented:
performing one of the following operations within a preset period of time before timeout of the first timer:
prohibiting initiating random access to the potential target cell corresponding to the first timer; and
prohibiting initiating random access to all the potential target cells.

Optionally, the preset period of time is determined in one of the following manners:
being configured by the source cell;
being configured by the target cell; and
being specified by a protocol.

Optionally, there are a plurality of first timers, and each potential target cell corresponds to one first timer; or all potential target cells correspond to one of the first timers.

Some embodiments of this disclosure further provide a communications device, and the communications device is a base station, including a processor and a memory. In some embodiments of this disclosure, the base station further includes a program stored in the memory and capable of running on the processor. When the program is executed by the processor, the following steps are implemented:
starting a first timer during a handover of a terminal, where a random access resource that is reserved or configured for the handover by a potential target cell remains valid only during running of the first timer.

Optionally, a starting condition of the first timer includes one of the following:
a handover request being sent to a target cell;
reception of a handover request response sent by a target cell;
a handover command and/or handover condition being sent to the terminal;
detection, by the terminal, that a measurement result satisfies a handover condition;
random access to a target cell being initiated by the terminal, where the target cell is selected by the terminal from the potential target cell; and
reception of a handover indication sent by the terminal.

Optionally, a stopping condition or suspending condition of the first timer includes one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; where
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

When the program is executed by the processor, the following steps are further implemented: after the first timer is started, the following is further included:
if a second timer is started during running of the first timer, using a timeout time point of the second timer as a timeout time point of the first timer, where
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, when the program is executed by the processor, the following steps may be further implemented:
if the first timer expires or the first timer stops, performing one of the following operations:
sending an indication to the potential target cell, where the indication is used for indicating that the potential target cell releases the random access resource reserved or configured for the handover;
sending an indication to the potential target cell, where the indication is used for indicating that the potential target cell sets the random access resource reserved or configured for the handover to be invalid;
sending an indication to the terminal, where the indication is used for indicating that the random access resource reserved or configured for the handover is invalid;
sending an indication to the terminal, where the indication is used for indicating that the first timer has expired or stopped;
sending an indication to the terminal, where the indication is used for indicating that the terminal is not allowed to initiate random access to the potential target cell corresponding to the first timer;
sending an indication to the terminal, where the indication is used for indicating that the terminal is not allowed to initiate random access to all the potential target cells; and
determining a handover failure.

Some embodiments of this disclosure further provide a communications device, and the communications device is a base station, including a processor and a memory. In some embodiments of this disclosure, the base station further includes a program stored in the memory and capable of running on the processor. When the program is executed by the processor, the following steps are implemented:
starting a first timer during a handover of the terminal, where a random access resource that is reserved or configured for the handover by a potential target cell remains valid only during running of the first timer.

Optionally, a starting condition of the first timer includes one of the following:
reception of a handover request sent by a source cell;
a random access resource being reserved or configured for the handover;
a handover request response being sent to the source cell;
a handover command and/or handover condition being sent;
detection, by the terminal, that a measurement result satisfies a handover condition;
random access to a target cell being initiated by the terminal, where the target cell is selected by the terminal from the potential target cell; and
reception of a handover indication sent by the terminal.

Optionally, a stopping condition or suspending condition of the first timer includes one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; where
a starting condition of the second timer is a handover command being sent to the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

When the program is executed by the processor, the following steps are further implemented:
after the first timer is started, the following is further included:
if a second timer is started during running of the first timer, using a timeout time point of the second timer as a timeout time point of the first timer, where
a starting condition of the second timer is a handover command being sent, a stopping condition of the second timer is successful access to the target cell by the terminal, and if the second timer expires but access to the target cell is not yet successful, a handover failure is determined; and
the target cell is selected by the terminal from the potential target cell.

Optionally, when the program is executed by the processor, the following steps may be further implemented:
if the first timer expires, performing one of the following operations:
releasing the random access resource reserved or configured for the handover;
setting the random access resource reserved or configured for the handover to be invalid; and
determining a handover failure.

Some embodiments of this disclosure further provide a communications device, and the communications device is a terminal, including a processor and a memory. In some embodiments of this disclosure, the terminal further includes a program stored in the memory and capable of running on the processor. When the program is executed by the processor, the following steps are implemented:
starting a second timer during a handover of the terminal; and
if the second timer expires but access to a target cell is not yet successful, determining a handover failure, where the target cell is selected by the terminal from potential target cells.

A starting condition of the second timer includes one of the following:
reception of a handover command and/or handover condition;
detection that a measurement result satisfies a handover condition;
random access to the target cell being initiated; and
a handover indication being sent.

Optionally, a stopping condition or suspending condition of the second timer includes one of the following:
detection that a measurement result satisfies a handover condition;
random access to the target cell being initiated;
successful access to the target cell; and
successful random access.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, when the program is executed by the processor, the following steps may be further implemented:
if the second timer expires or the second timer stops, performing one of the following operations:
prohibiting initiating random access to the potential target cell corresponding to the second timer;
prohibiting initiating random access to all the potential target cells;
allowing a random access procedure in progress to continue;
stopping a random access procedure in progress;
sending an indication for indicating that the potential target cell releases the random access resource that is reserved or configured for the handover; and
sending an indication for indicating that the second timer has expired or stopped.

Optionally, the stopping a random access procedure in progress includes at least one of the following:
determining that the random access procedure has failed; and
indicating to an upper layer that the random access procedure has failed.

Optionally, when the program is executed by the processor, the following steps may be further implemented:
performing one of the following operations within a preset period of time before timeout of the second timer:
prohibiting initiating random access to the potential target cell corresponding to the second timer; and
prohibiting initiating random access to all the potential target cells.

Optionally, the preset period of time is determined in one of the following manners:
being configured by the source cell;
being configured by the target cell; and
being specified by a protocol.

Optionally, there are a plurality of second timers, and each potential target cell corresponds to one second timer; or all potential target cells correspond to one of the second timers.

Some embodiments of this disclosure further provide a communications device, and the communications device is a base station, including a processor and a memory. In some embodiments of this disclosure, the base station further includes a program stored in the memory and capable of running on the processor. When the program is executed by the processor, the following steps are implemented:
starting a second timer during a handover of a terminal; and if the second timer expires but access to a target cell is not yet successful, determining a handover failure, where the target cell is selected by the terminal from potential target cells.

Optionally, a starting condition of the second timer includes one of the following:
a handover request being sent to a target cell;
reception of a handover request response sent by a target cell;
a handover command and/or handover condition being sent to the terminal;
detection, by the terminal, that a measurement result satisfies a handover condition;
random access to the target cell being initiated by the terminal; and
reception of a handover indication sent by the terminal.

Optionally, a stopping condition or suspending condition of the second timer includes one of the following:
detection, by the terminal, that a measurement result satisfies a handover condition;
random access to the target cell being initiated by the terminal;
successful access to the target cell being performed by the terminal; and
successful random access being performed by the terminal.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, when the program is executed by the processor, the following steps may be further implemented:
if the second timer expires or the second timer stops, performing one of the following operations:
sending an indication to the potential target cell, where the indication is used for indicating that the potential target cell releases the random access resource reserved or configured for the handover;
sending an indication to the potential target cell, where the indication is used for indicating that the potential target cell sets the random access resource reserved or configured for the handover to be invalid;
sending an indication to the terminal, where the indication is used for indicating that the random access resource reserved or configured for the handover is invalid;
sending an indication to the terminal, where the indication is used for indicating that the second timer has expired or stopped;
sending an indication to the terminal, where the indication is used for indicating that the terminal is not allowed to initiate random access to the potential target cell corresponding to the second timer; and
sending an indication to the terminal, where the indication is used for indicating that the terminal is not allowed to initiate random access to all the potential target cells.

Some embodiments of this disclosure further provide a communications device, and the communications device is a base station, including a processor and a memory. In some embodiments of this disclosure, the base station further includes a program stored in the memory and capable of running on the processor. When the program is executed by the processor, the following steps are implemented:
starting a second timer during a handover of a terminal; and if the second timer expires but access to a target cell is not yet successful, determining a handover failure, where the target cell is selected by the terminal from potential target cells.

Optionally, a starting condition of the second timer includes one of the following:
reception of a handover request sent by a source cell;
a random access resource being reserved or configured for the handover;
a handover request response being sent to the source cell;
a handover command and/or handover condition being sent;
detection, by the terminal, that a measurement result satisfies a handover condition;
random access to the target cell being initiated by the terminal; and
reception of a handover indication sent by the terminal.

Optionally, a stopping condition or suspending condition of the second timer includes one of the following:
detection, by the terminal, that a measurement result satisfies a handover condition;
random access to the target cell being initiated by the terminal;
successful access to the target cell being performed by the terminal; and
successful random access being performed by the terminal.

Optionally, the measurement result is a measurement result of the source cell and/or a measurement result of the potential target cell, and the handover condition includes at least one of the following:
the measurement result of the source cell is less than a first threshold;
the measurement result of the potential target cell is greater than a second threshold; and
the measurement result of the potential target cell is greater than the measurement result of the source cell for a third threshold.

Optionally, when the program is executed by the processor, the following steps may be further implemented:
if the second timer expires, performing one of the following operations:
releasing the random access resource reserved or configured for the handover; and
setting the random access resource reserved or configured for the handover to be invalid.

Some embodiments of this disclosure further provide a computer-readable storage medium, where a computer program is stored in the computer-readable storage medium. When the computer program is executed by a processor, the processes of the foregoing embodiment of the terminal handover method are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It may be understood that the embodiments described in this disclosure may be implemented by hardware, software, firmware, middleware, microcode, or a combination thereof. For hardware implementation, a module, a unit, a submodule, a subunit, and the like may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the techniques described in the embodiments of this disclosure may be implemented by modules (such as processes and functions) that perform the functions described in the embodiments of this disclosure. Software code may be stored in the memory and executed by the processor. The memory may be implemented in or outside the processor.

Therefore, the objectives of this disclosure can also be implemented by running a program or a set of programs on any computing apparatus. The computing apparatus may be a well-known general-purpose apparatus. Therefore, the objectives of this disclosure may also be implemented only by a program product that contains program code for implementing the method or apparatus. That is, such program product also constitutes this disclosure, and a storage medium storing such program product also constitutes this disclosure. Obviously, the storage medium may be any known storage medium or any storage medium developed in the future. It should be also noted that, in the apparatus and method of this disclosure, obviously, the components or steps can be decomposed and/or recombined. Further, the steps of performing the aforementioned series of processing may be naturally performed in an order of the description or in a time order, but is not necessarily performed in a time order. Some steps may be performed in parallel or independently of each other.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially, or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this disclosure.

The foregoing describes the embodiments of this disclosure with reference to the accompanying drawings. However, this disclosure is not limited to the foregoing specific implementation manners. The foregoing specific implementation manners are merely illustrative rather than restrictive. As instructed by this disclosure, persons of ordinary skill in the art may develop many other manners and the protection scope of this disclosure is defined by the scope of the appended claims.

## Claims

1. A terminal handover method, applied to a terminal and **characterized by** comprising:
starting (31) a first timer during a handover of the terminal, wherein a random access resource that is reserved or configured for the handover by a potential target cell remains valid only during running of the first timer,
wherein terminal handover method further comprises: after the starting (31) a first timer,
if a second timer is started during running of the first timer, using a timeout time point of the second timer as a timeout time point of the first timer, wherein
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

2. The terminal handover method according to claim 1, wherein a starting condition of the first timer comprises:
reception of a handover command and/or handover condition;
wherein a starting condition of the first timer comprises one of the following:
detection that a measurement result satisfies a handover condition;
random access to a target cell being initiated, wherein the target cell is selected by the terminal from the potential target cell; and
a handover indication being sent.

3. The terminal handover method according to claim 1, wherein a stopping condition or suspending condition of the first timer comprises one of the following:
detection that a measurement result satisfies a handover condition;
random access to a target cell being initiated;
successful access to the target cell;
random access being successful;
determining of a handover failure;
expiration of a second timer; and
starting of the second timer; wherein
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

4. The terminal handover method according to claim 2 or 3, wherein the measurement result is a measurement result of the source cell and/or a measurement result of the potential target cell, and the handover condition comprises at least one of the following:
the measurement result of the source cell is less than a first threshold;
the measurement result of the potential target cell is greater than a second threshold; and
the measurement result of the potential target cell is greater than the measurement result of the source cell for a third threshold.

5. The terminal handover method according to claim 1, further comprising:
if the first timer expires or the first timer stops, performing one of the following operations:
prohibiting initiating random access to the potential target cell corresponding to the first timer;
prohibiting initiating random access to all the potential target cells;
allowing a random access procedure in progress to continue;
allowing a random access procedure in progress to continue until a second timer expires;
stopping a random access procedure in progress;
determining a handover failure;
sending an indication for indicating that the potential target cell releases the random access resource that is reserved or configured for the handover; and
sending an indication for indicating that the first timer has expired or stopped; wherein
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

6. The terminal handover method according to claim 5, wherein the stopping a random access procedure in progress comprises at least one of the following:
determining that the random access procedure has failed; and
indicating to an upper layer that the random access procedure has failed.

7. The terminal handover method according to claim 1, further comprising:
performing one of the following operations within a preset period of time before timeout of the first timer:
prohibiting initiating random access to the potential target cell corresponding to the first timer; and
prohibiting initiating random access to all the potential target cells,
wherein the preset period of time is determined in one of the following manners:
being configured by the source cell;
being configured by the target cell; and
being specified by a protocol.

8. The terminal handover method according to claim 1, wherein
there are a plurality of first timers, and each potential target cell corresponds to one first timer; or
all potential target cells correspond to one of the first timers.

9. A terminal handover method, applied to a source base station or a target base station, **characterized by** comprising:
starting (41, 51) a first timer during a handover of a terminal, wherein a random access resource that is reserved or configured for the handover by a potential target cell remains valid only during running of the first timer,
wherein the terminal handover method further comprises: after the starting (41, 51) a first timer,
if a second timer is started during running of the first timer, using a timeout time point of the second timer as a timeout time point of the first timer, wherein
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

10. The terminal handover method according to claim 9, wherein a starting condition of the first timer comprises one of the following:
a handover request being sent to a target cell;
reception of a handover request response sent by a target cell;
a handover command and/or handover condition being sent to the terminal;
detection, by the terminal, that a measurement result satisfies a handover condition;
random access to a target cell being initiated by the terminal, wherein the target cell is selected by the terminal from the potential target cell; and
reception of a handover indication sent by the terminal,
and/or,
wherein a stopping condition or suspending condition of the first timer comprises one of the following:
detection, by the terminal, that a measurement result satisfies a handover condition;
random access to a target cell being initiated by the terminal;
successful access to the target cell being performed by the terminal;
random access by the terminal being successful;
determining of a handover failure;
expiration of a second timer; and
starting of the second timer; wherein
a starting condition of the second timer is reception of a handover command by the terminal, a stopping condition of the second timer is successful access to the target cell by the terminal, and if the second timer expires but access to the target cell by the terminal is not yet successful, a handover failure is determined; and
the target cell is selected by the terminal from the potential target cell.

11. The terminal handover method according to claim 10, wherein the measurement result is a measurement result of the source cell and/or a measurement result of the potential target cell, and the handover condition comprises at least one of the following:
the measurement result of the source cell is less than a first threshold;
the measurement result of the potential target cell is greater than a second threshold; and
the measurement result of the potential target cell is greater than the measurement result of the source cell for a third threshold.

12. The terminal handover method according to claim 9, wherein the terminal handover method further comprises:
if the first timer expires or the first timer stops, performing one of the following operations:
sending an indication to the potential target cell, wherein the indication is used for indicating that the potential target cell releases the random access resource reserved or configured for the handover;
sending an indication to the potential target cell, wherein the indication is used for indicating that the potential target cell sets the random access resource reserved or configured for the handover to be invalid;
sending an indication to the terminal, wherein the indication is used for indicating that the random access resource reserved or configured for the handover is invalid;
sending an indication to the terminal, wherein the indication is used for indicating that the first timer has expired or stopped;
sending an indication to the terminal, wherein the indication is used for indicating that the terminal is not allowed to initiate random access to the potential target cell corresponding to the first timer;
sending an indication to the terminal, wherein the indication is used for indicating that the terminal is not allowed to initiate random access to all the potential target cells; and
determining a handover failure.

13. A communications device, **characterized by** comprising:
a starting module (91, 101, 111), configured to start a first timer during a handover of a terminal, wherein a random access resource that is reserved or configured for the handover by a potential target cell remains valid only during running of the first timer,
wherein the communications device further comprises:
a modification module, configured to: if a second timer is started during running of the first timer, use a timeout time point of the second timer as a timeout time point of the first timer, where
a starting condition of the second timer is reception of a handover command, a stopping condition of the second timer is successful access to the target cell, and if the second timer expires but access to the target cell is not yet successful, a handover failure is determined; and
the target cell is selected by the terminal from the potential target cell.

14. A readable storage medium, wherein a computer program is stored in the readable storage medium, **characterized in that** when the computer program is executed by a processor, the steps of the terminal handover method according to any one of claims 1 to 12 are implemented.

15. A computer program product, **characterized by** comprising a computer program that, when executed by a processor, causes the processor to implement steps of the terminal handover method according to any one of claims 1 to 12.

## Patentansprüche

1. Endgerät-Übergabeverfahren, angewendet auf ein Endgerät, **dadurch gekennzeichnet, dass** es umfasst:
Starten (31) eines ersten Timers während einer Übergabe des Endgeräts, wobei eine Direktzugriffsressource, die für die Übergabe durch eine potenzielle Zielzelle reserviert oder eingerichtet ist, nur während des Laufens des ersten Timers gültig bleibt,
wobei das Endgerät-Übergabeverfahren ferner umfasst: nach dem Starten (31) eines ersten Timers,
wenn ein zweiter Timer während des Laufens des ersten Timers gestartet wird, Verwenden eines Timeout-Zeitpunkts des zweiten Timers als einen Timeout-Zeitpunkt des ersten Timers, wobei
eine Startbedingung des zweiten Timers der Empfang eines Übergabebefehls ist, eine Stoppbedingung des zweiten Timers ein erfolgreicher Zugriff auf die Zielzelle ist, und wenn der zweite Timer abläuft, aber der Zugriff auf die Zielzelle noch nicht erfolgreich ist, ein Übergabefehler bestimmt wird; und
die Zielzelle aus der potenziellen Zielzelle durch das Endgerät ausgewählt wird.

2. Endgerät-Übergabeverfahren nach Anspruch 1, wobei eine Startbedingung des ersten Timers umfasst:
Empfang eines Übergabebefehls und/oder einer Übergabebedingung;
wobei eine Startbedingung des ersten Timers eines der Folgenden umfasst:
Erkennung, dass ein Messergebnis eine Übergabebedingung erfüllt;
Direktzugriff auf eine Zielzelle wird initiiert, wobei die Zielzelle vom Endgerät aus den potenziellen Zielzellen ausgewählt wird; und
eine Übergabeangabe wird gesendet.

3. Endgerät-Übergabeverfahren nach Anspruch 1, wobei eine Stoppbedingung oder eine Aussetzbedingung des ersten Timers eines der Folgenden umfasst:
Erkennung, dass ein Messergebnis eine Übergabebedingung erfüllt;
Direktzugriff auf eine Zielzelle wird initiiert;
erfolgreicher Zugriff auf die Zielzelle;
Direktzugriff ist erfolgreich;
Bestimmen eines Übergabefehlers;
Ablaufen eines zweiten Timers; und
Starten des zweiten Timers; wobei
eine Startbedingung des zweiten Timers der Empfang eines Übergabebefehls ist, eine Stoppbedingung des zweiten Timers der erfolgreiche Zugriff auf die Zielzelle ist, und wenn der zweite Timer abläuft und der Zugriff auf die Zielzelle jedoch noch nicht erfolgreich ist, ein Übergabefehler bestimmt wird; und
die Zielzelle aus der potenziellen Zielzelle durch das Endgerät ausgewählt wird.

4. Endgerät-Übergabeverfahren nach Anspruch 2 oder 3, wobei das Messergebnis ein Messergebnis der Quellzelle und/oder ein Messergebnis der potenziellen Zielzelle ist und die Übergabebedingung zumindest eines der Folgenden umfasst:
das Messergebnis der Quellzelle ist kleiner als ein erster Schwellenwert; und/oder
das Messergebnis der potenziellen Zielzelle ist größer als ein zweiter Schwellenwert; und/oder
das Messergebnis der potenziellen Zielzelle ist größer als das Messergebnis der Quellzelle um einen dritten Schwellenwert.

5. Endgerät-Übergabeverfahren nach Anspruch 1, ferner umfassend:
wenn der erste Timer abläuft oder der erste Timer stoppt, Durchführen einer der folgenden Vorgänge:
Verhindern des Initiierens eines Direktzugriffs auf die potenzielle Zielzelle entsprechend dem ersten Timer;
Verhindern des Initiierens eines Direktzugriffs auf alle potenziellen Zielzellen;
Zulassen, dass ein laufender Direktzugriffsvorgang fortgesetzt wird;
Zulassen, dass ein laufender Direktzugriffsvorgang bis zum Ablaufen eines zweiten Timers fortgesetzt wird;
Stoppen eines laufenden Direktzugriffsvorgangs;
Bestimmen eines Übergabefehlers;
Senden einer Angabe, um anzugeben, dass die potenzielle Zielzelle die für die Übergabe reservierte oder eingerichtete Direktzugriffsressource freigibt; und
Senden einer Angabe, um anzugeben, dass der erste Timer abgelaufen ist oder gestoppt wurde; wobei
eine Startbedingung des zweiten Timers der Empfang eines Übergabebefehls ist, eine Stoppbedingung des zweiten Timers der erfolgreiche Zugriff auf die Zielzelle ist, und wenn der zweite Timer abläuft und der Zugriff auf die Zielzelle jedoch noch nicht erfolgreich ist, ein Übergabefehler bestimmt wird; und
die Zielzelle aus der potenziellen Zielzelle durch das Endgerät ausgewählt wird.

6. Endgerät-Übergabeverfahren nach Anspruch 5, wobei das Stoppen eines laufenden Direktzugriffsvorgangs zumindest eines der Folgenden umfasst:
Bestimmen, dass der Direktzugriffsvorgang fehlgeschlagen ist; und/oder
Angeben an eine höhere Schicht, dass der Direktzugriffsvorgang fehlgeschlagen ist.

7. Endgerät-Übergabeverfahren nach Anspruch 1, ferner umfassend:
Durchführen einer der folgenden Vorgänge innerhalb einer vorbestimmten Zeitdauer vor dem Timeout des ersten Timers:
Verhindern des Initiierens eines Direktzugriffs auf die potenzielle Zielzelle, die dem ersten Timer entspricht; und
Verhindern des Initiierens eines Direktzugriffs auf alle potenziellen Zielzellen,
wobei die vorbestimmte Zeitdauer auf eine der folgenden Arten bestimmt wird:
Einrichten durch die Quellzelle;
Einrichten durch die Zielzelle; und
Spezifizieren durch ein Protokoll.

8. Endgerät-Übergabeverfahren nach Anspruch 1, wobei
es eine Mehrzahl von ersten Timer gibt und jede potenzielle Zielzelle einem ersten Timer entspricht; oder
alle potenziellen Zielzellen einem der ersten Timer entsprechen.

9. Endgerät-Übergabeverfahren, angewendet auf eine Quellbasisstation oder eine Zielbasisstation, **dadurch gekennzeichnet, dass** es umfasst:
Starten (41, 51) eines ersten Timers während einer Übergabe eines Endgeräts, wobei eine Direktzugriffsressource, die für die Übergabe durch eine potenzielle Zielzelle reserviert oder eingerichtet ist, nur während des Laufens des ersten Timers gültig bleibt,
wobei das Endgerät-Übergabeverfahren ferner umfasst: nach dem Starten (41, 51) eines ersten Timers,
wenn ein zweiter Timer während des Laufens des ersten Timers gestartet wird, Verwenden eines Timeout-Zeitpunkts des zweiten Timers als einen Timeout-Zeitpunkt des ersten Timers, wobei
eine Startbedingung des zweiten Timers der Empfang eines Übergabebefehls durch das Endgerät ist, eine Stoppbedingung des zweiten Timers der erfolgreiche Zugriff auf die Zielzelle durch das Endgerät ist, und wenn der zweite Timer abläuft, aber der Zugriff auf die Zielzelle durch das Endgerät noch nicht erfolgreich ist, ein Übergabefehler festgestellt wird; und
die Zielzelle aus der potenziellen Zielzelle durch das Endgerät ausgewählt wird.

10. Endgerät-Übergabeverfahren nach Anspruch 9, wobei eine Startbedingung des ersten Timers eines der Folgenden umfasst:
eine Übergabeanforderung wird an eine Zielzelle gesendet;
Empfang einer von einer Zielzelle gesendeten Übergabeanforderungsantwort;
ein Übergabebefehl und/oder Übergabebedingung wird an das Endgerät gesendet;
Erkennung durch das Endgerät, dass ein Messergebnis eine Übergabebedingung erfüllt;
Direktzugriff auf eine Zielzelle wird durch das Endgerät initiiert, wobei die Zielzelle aus den potenziellen Zielzellen durch das Endgerät ausgewählt wird; und
Empfang einer vom Endgerät gesendeten Übergabeangabe,
und/oder,
wobei eine Stoppbedingung oder eine Aussetzbedingung des ersten Timers eines der Folgenden umfasst:
Erkennung durch das Endgerät, dass ein Messergebnis eine Übergabebedingung erfüllt;
Direktzugriff auf eine Zielzelle wird durch das Endgerät initiiert;
erfolgreicher Zugriff auf die Zielzelle wird durch das Endgerät durchgeführt;
Direktzugriff durch das Endgerät ist erfolgreich;
Bestimmen eines Übergabefehlers;
Ablaufen eines zweiten Timers; und
Starten des zweiten Timers; wobei
eine Startbedingung des zweiten Timers der Empfang eines Übergabebefehls durch das Endgerät ist, eine Stoppbedingung des zweiten Timers der erfolgreiche Zugriff auf die Zielzelle durch das Endgerät ist, und wenn der zweite Timer abläuft, aber der Zugriff auf die Zielzelle durch das Endgerät noch nicht erfolgreich ist, ein Übergabefehler bestimmt wird; und
die Zielzelle aus der potenziellen Zielzelle durch das Endgerät ausgewählt wird.

11. Endgerät-Übergabeverfahren nach Anspruch 10, wobei das Messergebnis ein Messergebnis der Quellzelle und/oder ein Messergebnis der potenziellen Zielzelle ist und die Übergabebedingung umfasst:
das Messergebnis der Quellzelle ist kleiner als ein erster Schwellenwert; und/oder
das Messergebnis der potenziellen Zielzelle ist größer als ein zweiter Schwellenwert; und/oder
das Messergebnis der potenziellen Zielzelle ist größer als das Messergebnis der Quellzelle um einen dritten Schwellenwert.

12. Endgerät-Übergabeverfahren nach Anspruch 9, wobei das Endgerät-Übergabeverfahren ferner umfasst:
wenn der erste Timer abläuft oder der erste Timer stoppt, Durchführen einer der folgenden Vorgänge:
Senden einer Angabe an die potenzielle Zielzelle, wobei die Angabe verwendet wird, um anzugeben, dass die potenzielle Zielzelle die für die Übergabe reservierte oder eingerichtete Direktzugriffsressource freigibt;
Senden einer Angabe an die potenzielle Zielzelle, wobei die Angabe verwendet wird, um anzugeben, dass die potenzielle Zielzelle die für die Übergabe reservierte oder eingerichtete Direktzugriffsressource als ungültig setzt;
Senden einer Angabe an das Endgerät, wobei die Angabe verwendet wird, um anzugeben, dass die für die Übergabe reservierte oder eingerichtete Direktzugriffsressource ungültig ist;
Senden einer Angabe an das Endgerät, wobei die Angabe verwendet wird, um anzugeben, dass der erste Timer abgelaufen ist oder gestoppt ist;
Senden einer Angabe an das Endgerät, wobei die Angabe verwendet wird, um anzugeben, dass das Endgerät keinen Direktzugriff auf die potenzielle Zielzelle entsprechend dem ersten Timer initiieren darf;
Senden einer Angabe an das Endgerät, wobei die Angabe verwendet wird, um anzugeben, dass das Endgerät keinen Direktzugriff auf alle potenziellen Zielzellen initiieren darf; und
Bestimmen eines Übergabefehlers.

13. Kommunikationsvorrichtung, **gekennzeichnet durch**:
ein Startmodul (91, 101, 111), das eingerichtet ist, einen ersten Timer während einer Übergabe eines Endgeräts zu starten, wobei eine Direktzugriffsressource, die für die Übergabe durch eine potenzielle Zielzelle reserviert oder eingerichtet ist, nur während des Laufens des ersten Timers gültig bleibt,
wobei die Kommunikationsvorrichtung ferner aufweist:
ein Modifikationsmodul, das eingerichtet ist, einen Timeout-Zeitpunkt des zweiten Timers als einen Timeout-Zeitpunkt des ersten Timers zu verwenden, wenn ein zweiter Timer während des Laufens des ersten Timers gestartet wird, wobei
eine Startbedingung des zweiten Timers der Empfang eines Übergabebefehls ist, eine Stoppbedingung des zweiten Timers der erfolgreiche Zugriff auf die Zielzelle ist, und wenn der zweite Timer abläuft, aber der Zugriff auf die Zielzelle noch nicht erfolgreich ist, ein Übergabefehler bestimmt wird; und
die Zielzelle aus der potenziellen Zielzelle durch das Endgerät ausgewählt wird.

14. Lesbares Speichermedium, wobei ein Computerprogramm in dem lesbaren Speichermedium gespeichert ist, **dadurch gekennzeichnet, dass** die Schritte des Endgerät-Übergabeverfahrens gemäß einem der Ansprüche 1 bis 12 durchgeführt werden, wenn das Computerprogramm von einem Prozessor ausgeführt wird.

15. Computerprogrammprodukt, **dadurch gekennzeichnet, dass** es ein Computerprogramm aufweist, das, wenn es von einem Prozessor ausgeführt wird, den Prozessor veranlasst, die Schritte des Endgerät-Übergabeverfahrens gemäß einem der Ansprüche 1 bis 12 durchzuführen.

## Revendications

1. Procédé de transfert de terminal, appliqué à un terminal et **caractérisé en ce qu'**il comprend :
le démarrage (31) d'un premier temporisateur pendant un transfert du terminal, dans lequel une ressource d'accès aléatoire qui est réservée ou configurée pour le transfert par une cellule cible potentielle reste valide uniquement pendant le fonctionnement du premier temporisateur,
dans lequel le procédé de transfert de terminal comprend en outre : après le démarrage (31) d'un premier temporisateur,
si un second temporisateur est démarré pendant le fonctionnement du premier temporisateur, en utilisant un point temporel de temporisation du second temporisateur comme un point temporel de temporisation du premier temporisateur, dans lequel
une condition de démarrage du second temporisateur est la réception d'une commande de transfert, une condition d'arrêt du second temporisateur est un accès réussi à la cellule cible, et si le second temporisateur expire, mais que l'accès à la cellule cible n'est pas encore réussi, un échec de transfert est déterminé ; et
la cellule cible est sélectionnée par le terminal à partir de la cellule cible potentielle.

2. Procédé de transfert de terminal selon la revendication 1, dans lequel une condition de démarrage du premier temporisateur comprend :
la réception d'une commande de transfert et/ou d'une condition de transfert ;
dans lequel une condition de démarrage du premier temporisateur comprend l'un des éléments suivants :
la détection qu'un résultat de mesure satisfait à une condition de transfert ;
l'accès aléatoire à une cellule cible étant lancé, dans lequel la cellule cible est sélectionnée par le terminal à partir de la cellule cible potentielle ; et
une indication de transfert étant envoyée.

3. Procédé de transfert de terminal selon la revendication 1, dans lequel une condition d'arrêt ou une condition de suspension du premier temporisateur comprend l'un des éléments suivants :
la détection qu'un résultat de mesure satisfait à une condition de transfert ;
l'accès aléatoire à une cellule cible étant lancé ;
l'accès réussi à la cellule cible ;
l'accès aléatoire étant réussi ;
la détermination d'un échec de transfert ;
l'expiration d'un second temporisateur ; et
le démarrage du second temporisateur ; dans lequel
une condition de démarrage du second temporisateur est la réception d'une commande de transfert, une condition d'arrêt du second temporisateur est l'accès réussi à la cellule cible, et si le second temporisateur expire, mais que l'accès à la cellule cible n'est pas encore réussi, un échec de transfert est déterminé ; et
la cellule cible est sélectionnée par le terminal à partir de la cellule cible potentielle.

4. Procédé de transfert de terminal selon la revendication 2 ou 3, dans lequel le résultat de mesure est un résultat de mesure de la cellule source et/ou un résultat de mesure de la cellule cible potentielle, et la condition de transfert comprend au moins l'un des éléments suivants :
le résultat de mesure de la cellule source est inférieur à un premier seuil ;
le résultat de mesure de la cellule cible potentielle est supérieur à un deuxième seuil ; et
le résultat de mesure de la cellule cible potentielle est supérieur au résultat de mesure de la cellule source pour un troisième seuil.

5. Procédé de transfert de terminal selon la revendication 1, comprenant en outre :
si le premier temporisateur expire ou le premier temporisateur s'arrête, la réalisation de l'une des opérations suivantes :
l'interdiction du lancement d'un accès aléatoire à la cellule cible potentielle correspondant au premier temporisateur ;
l'interdiction du lancement d'un accès aléatoire à toutes les cellules cibles potentielles ;
l'autorisation donnée à une procédure d'accès aléatoire en cours de se poursuivre ;
l'autorisation donnée à une procédure d'accès aléatoire en cours de se poursuivre jusqu'à ce qu'un second temporisateur expire ;
l'arrêt d'une procédure d'accès aléatoire en cours ;
la détermination d'un échec de transfert ;
l'envoi d'une indication pour indiquer que la cellule cible potentielle libère la ressource d'accès aléatoire qui est réservée ou configurée pour le transfert ; et
l'envoi d'une indication pour indiquer que le premier temporisateur a expiré ou s'est arrêté ; dans lequel
une condition de démarrage du second temporisateur est la réception d'une commande de transfert, une condition d'arrêt du second temporisateur est un accès réussi à la cellule cible, et si le second temporisateur expire, mais que l'accès à la cellule cible n'est pas encore réussi, un échec de transfert est déterminé ; et
la cellule cible est sélectionnée par le terminal à partir de la cellule cible potentielle.

6. Procédé de transfert de terminal selon la revendication 5, dans lequel l'arrêt d'une procédure d'accès aléatoire en cours comprend au moins l'un des éléments suivants :
la détermination que la procédure d'accès aléatoire a échoué ; et
l'indication à une couche supérieure que la procédure d'accès aléatoire a échoué.

7. Procédé de transfert de terminal selon la revendication 1, comprenant en outre :
la réalisation d'une des opérations suivantes dans une période de temps prédéfinie avant une temporisation du premier temporisateur :
l'interdiction du lancement d'un accès aléatoire à la cellule cible potentielle correspondant au premier temporisateur ; et
l'interdiction du lancement d'un accès aléatoire à toutes les cellules cibles potentielles ;
dans lequel la période de temps prédéfinie est déterminée de l'une des manières suivantes :
étant configurée par la cellule source ;
étant configurée par la cellule cible ; et
étant précisée par un protocole.

8. Procédé de transfert de terminal selon la revendication 1, dans lequel
il existe une pluralité de premiers temporisateurs, et chaque cellule cible potentielle correspond à un premier temporisateur ; ou
toutes les cellules cibles potentielles correspondent à l'un des premiers temporisateurs.

9. Procédé de transfert de terminal, appliqué à une station de base source ou à une station de base cible, **caractérisé en ce qu'**il comprend :
le démarrage (41, 51) d'un premier temporisateur pendant un transfert d'un terminal, dans lequel une ressource d'accès aléatoire qui est réservée ou configurée pour le transfert par une cellule cible potentielle reste valide uniquement pendant le fonctionnement du premier temporisateur,
dans lequel le procédé de transfert de terminal comprend en outre : après le démarrage (41, 51) d'un premier temporisateur,
si un second temporisateur est démarré pendant le fonctionnement du premier temporisateur, en utilisant un point temporel de temporisation du second temporisateur comme point temporel de temporisation du premier temporisateur, dans lequel
une condition de démarrage du second temporisateur est la réception d'une commande de transfert par le terminal, une condition d'arrêt du second temporisateur est l'accès réussi à la cellule cible par le terminal, et si le second temporisateur expire, mais que l'accès à la cellule cible par le terminal n'est pas encore réussi, un échec de transfert est déterminé ; et
la cellule cible est sélectionnée par le terminal à partir de la cellule cible potentielle.

10. Procédé de transfert de terminal selon la revendication 9, dans lequel une condition de démarrage du premier temporisateur comprend l'un des éléments suivants :
une demande de transfert qui est envoyée à une cellule cible ;
la réception d'une réponse à la demande de transfert envoyée par une cellule cible ;
une commande de transfert et/ou une condition de transfert étant envoyée(s) au terminal ;
la détection, par le terminal, qu'un résultat de mesure satisfait à une condition de transfert ;
l'accès aléatoire à une cellule cible étant lancé par le terminal, dans lequel la cellule cible est sélectionnée par le terminal à partir de la cellule cible potentielle ; et
la réception d'une indication de transfert envoyée par le terminal,
et/ou
dans lequel une condition d'arrêt ou une condition de suspension du premier temporisateur comprend l'un des éléments suivants :
la détection, par le terminal, qu'un résultat de mesure satisfait à une condition de transfert ;
l'accès aléatoire à une cellule cible étant lancé par le terminal ;
l'accès réussi à la cellule cible étant réalisé par le terminal ;
l'accès aléatoire par le terminal étant réussi ;
la détermination d'un échec de transfert ;
l'expiration d'un second temporisateur ; et
le démarrage du second temporisateur ; dans lequel
une condition de démarrage du second temporisateur est la réception d'une commande de transfert par le terminal, une condition d'arrêt du second temporisateur est l'accès réussi à la cellule cible par le terminal, et si le second temporisateur expire, mais que l'accès à la cellule cible par le terminal n'est pas encore réussi, un échec de transfert est déterminé ; et
la cellule cible est sélectionnée par le terminal à partir de la cellule cible potentielle.

11. Procédé de transfert de terminal selon la revendication 10, dans lequel le résultat de mesure est un résultat de mesure de la cellule source et/ou un résultat de mesure de la cellule cible potentielle, et la condition de transfert comprend au moins l'un des éléments suivants :
le résultat de mesure de la cellule source est inférieur à un premier seuil ;
le résultat de mesure de la cellule cible potentielle est supérieur à un deuxième seuil ; et
le résultat de mesure de la cellule cible potentielle est supérieur au résultat de mesure de la cellule source pour un troisième seuil.

12. Procédé de transfert de terminal selon la revendication 9, dans lequel le procédé de transfert de terminal comprend en outre :
si le premier temporisateur expire ou le premier temporisateur s'arrête, la réalisation de l'une des opérations suivantes :
l'envoi d'une indication à la cellule cible potentielle, dans lequel l'indication est utilisée pour indiquer que la cellule cible potentielle libère la ressource d'accès aléatoire réservée ou configurée pour le transfert ;
l'envoi d'une indication à la cellule cible potentielle, dans lequel l'indication est utilisée pour indiquer que la cellule cible potentielle fixe la ressource d'accès aléatoire réservée ou configurée pour le transfert comme étant non valide ;
l'envoi d'une indication au terminal, dans lequel l'indication est utilisée pour indiquer que la ressource d'accès aléatoire réservée ou configurée pour le transfert n'est pas valide ;
l'envoi d'une indication au terminal, dans lequel l'indication est utilisée pour indiquer que le premier temporisateur a expiré ou s'est arrêté ;
l'envoi d'une indication au terminal, dans lequel l'indication est utilisée pour indiquer que le terminal n'est pas autorisé à lancer un accès aléatoire à la cellule cible potentielle correspondant au premier temporisateur ;
l'envoi d'une indication au terminal, dans lequel l'indication est utilisée pour indiquer que le terminal n'est pas autorisé à lancer un accès aléatoire à toutes les cellules cibles potentielles ; et
la détermination d'un échec de transfert.

13. Dispositif de communication, **caractérisé en ce qu'**il comprend :
un module de démarrage (91, 101, 111), configuré pour démarrer un premier temporisateur pendant un transfert d'un terminal, dans lequel une ressource d'accès aléatoire qui est réservée ou configurée pour le transfert par une cellule cible potentielle reste valide uniquement pendant le fonctionnement du premier temporisateur,
dans lequel le dispositif de communication comprend en outre :
un module de modification, configuré pour : si un second temporisateur est démarré pendant le fonctionnement du premier temporisateur, utiliser un point temporel de temporisation du second temporisateur comme un point temporel de temporisation du premier temporisateur, où
une condition de démarrage du second temporisateur est la réception d'une commande de transfert, une condition d'arrêt du second temporisateur est un accès réussi à la cellule cible, et si le second temporisateur expire, mais que l'accès à la cellule cible n'est pas encore réussi, un échec de transfert est déterminé ; et
la cellule cible est sélectionnée par le terminal à partir de la cellule cible potentielle.

14. Support de stockage lisible, dans lequel un programme informatique est stocké dans le support de stockage lisible, **caractérisé en ce que** lorsque le programme informatique est exécuté par un processeur, les étapes du procédé de transfert de terminal selon l'une quelconque des revendications 1 à 12 sont implémentées.

15. Produit de programme informatique, **caractérisé en ce qu'**il comprend un programme informatique qui, lorsqu'il est exécuté par un processeur, amène le processeur à implémenter les étapes du procédé de transfert de terminal selon l'une quelconque des revendications 1 à 12.
